# EUROPÄISCHE PATENTSCHRIFT

(11) **EP 0 769 215 B1**
(45) Veröffentlichungstag und Bekanntmachung des Hinweises auf die Patenterteilung: **29.07.1998**
(21) Anmeldenummer: 95915811.4
(22) Anmeldetag: 21.04.1995
(51) Int. Cl.: H02G 15/117, H04Q 1/14, H01R 43/00

(54) **VERFAHREN ZUM UNTERBRECHUNGSFREIEN UMSCHALTEN VON FERNMELDEKABELN UND UMSCHALTVORRICHTUNG HIERFÜR**
METHOD OF SWITCHING OVER TELECOMMUNICATIONS CABLES WITHOUT INTERRUPTION, AND SWITCH OVER PLUG FOR USE IN THE METHOD
PROCEDE DE COMMUTATION ININTERROMPUE DE CABLES DE TELECOMMUNICATION ET SYSTEME DE COMMUTATION UTILISE POUR METTRE LEDIT PROCEDE EN OEUVRE

(30) Priorität: 05.07.1994 DE 4423393
(43) Veröffentlichungstag der Anmeldung: 23.04.1997
(73) Patentinhaber: Zimmermann, Ria, 71546 Aspach (DE); Rosendahl, Gabriele, 74172 Neckarsulm (DE); Zimmermann, Wolfgang, 71546 Aspach (DE)
(72) Erfinder: ZIMMERMANN, Wolfgang, D-71546 Aspach (DE)
(74) Vertreter: Clemens, Gerhard, Dr.-Ing.
(86) Internationale Anmeldenummer: DE9500551
(87) Internationale Veröffentlichungsnummer: WO9601514

(56) Entgegenhaltungen:
- DE-A- 2 334 334
- US-A- 4 675 895
- US-A- 4 817 282
- JAPAN TELECOMMUNICATIONS REVIEW (JTR), Bd.30, Nr.1, 8, TOKYO Seiten 38 - 44 YUZO TSUCHIYA ET AL. 'Cable Transfer Splicing System'

## Beschreibung

### TECHNISCHES GEBIET

Die vorliegende Erfindung betrifft eine Umschaltvorrichtung, bevorzugt für eine Adernverbindungsleisten-Einrichtung, zum unterbrechungsfreien Umschalten von Adern eines Fernmeldekabels mit einer Vielzahl von (Doppel)-Adern, wobei die Adernverbindungsleisten-Einrichtung insbesondere eine Aderverbindungsleiste, eine Bodeneinheit und eine Deckeleinheit aufweist und die Aderverbindungsleiste Kontakteinheiten zum jeweiligen Anschließen der Ader eines ankommenden Fernmeldekabels und eines abgehenden Fernmeldekabels besitzt zum Herstellen eines elektrischen Kontaktes der jeweiligen Adern des ankommenden bzw. abgehenden Fernmeldekabels, wobei die Adernverbindungsleiste für jede Kontakteinheit eine nach außen offene Prüföffnung aufweist. Die vorliegende Erfindung betrifft ein Verfahren zum Umschalten von einem bestehenden, beschädigten oder gestörten und damit auszutauschenden Fernmeldekabel bzw. den Adern des Fernmeldekabels auf neue störungsfreie Adern, insbesondere auf ein neues parallel zu dem bestehenden in einem Kabelkanal eingezogenen Fernmeldekabel zwischen zwei Verbindungsmuffen, wobei die Verbindung zwischen ankommendem und abgehenden Fernmeldekabel bzw. Ader an einer Verbindungsmuffe mittels einer Adernverbindungsleisten-Einrichtung erfolgt.

Seit Jahren werden Adernverbindungsleisten zum Verbinden der (Doppel)-Adern in Fernmeldekabel verwendet. Durch Kabelstörungen und Neuplanungen werden täglich die bisherigen Blei- bzw. PWY-Kabel ausgewechselt. Daher treten immer mehr Arbeiten an bestehenden Kabeln auf, die mit Aderverbindungsleisten miteinander gekoppelt sind. Auch die letzte Kabelgeneration, z. B. PE-Kabel, d. h. Kunststoffisolierung der Kupferadern, ist häufig auszuwechseln.

### STAND DER TECHNIK

Eine Steckvorrichtung zum Aufstecken auf die Prüfkontakte einer Adernverbindungsleisten-Einrichtung zum unterbrechungsfreien Umschalten von Fernmeldekabeln ist nicht bekannt. Bei dem bekannten Verfahren wird wie folgt gearbeitet. Zunächst wird davon ausgegangen, daß zwischen zwei Verbindungsmuffen, an denen jeweils das neue Fernmeldekabel angeschlossen werden muß, bereits ein neues Fernmeldekabel in den Kabelkanal eingezogen ist und mit seinen abisolierten freigelegten einzelnen Adern an der jeweiligen Verbindungsmuffe vorhanden ist. Beide Verbindungsmuffen werden von Monteuren (A + B) besetzt. Monteur A schließt mittels einer bekannten Aderverbindungsleiste die jeweiligen Adern an die Verbindungsleiste an. Dies geschieht normalerweise mittels eines Spleißkammes. Dabei wird eine Aderverbindungsleiste eingesetzt, die unter der Abkürzung AVL U im Fernmeldebereich bekannt ist. Monteur B spleißt die neue Kabellänge in eine normale Aderverbindungsleiste (AVL) ein. Die in der jeweiligen Verbindungsmuffe ankommenden nicht auszutauschenden Fernmeldekabel, an die der Anschluß zu erfolgen hat, werden im Bereich von ca. 30 cm bis 1,0 m nachgesetzt, damit ein Vorratsbogen aus einzelnen Adern entsteht, den man wiederum benötigt, um die (Doppel)-Adern (DA) in die neuen AVL bzw. AVL U einlegen zu können.

Bei diesem Verfahren müssen die vorhandenen Muffen, die die jeweiligen AVL aus Dichtigkeitsgründen umgeben, komplett entfernt werden. Ist das alte noch in Betrieb befindliche Kabel straff und gerade durch den Kabelschacht bzw. die Erdlötstelle geführt, muß anhand eines Doppeladernverbinders ohne Unterbrechung (fernmeldespezifische Bezeichnung DAV U bzw. AAKv (UPB)) der nötige Vorratsbogen hergestellt werden, den man zum Einlegen der jeweiligen Adern in die AVL benötigt. Mit der AVL U auf der einen Seite wird eine Dreiecks- bzw. Parallelschaltung (auch Knotenspleiß genannt) hergestellt. Der Monteur an der anderen Schnittstelle muß bei straffer Kabelführung auch die DA wie bereits beschrieben verlängern. Sobald Monteur B seine DA umgeschaltet hat, kann die Dreiecksschaltung aufgehoben werden. Beide Verbindungsstellen sind nach dem Herstellen der Verbindung erneut mit Muffen zu verschließen. Die bekannte Verfahrensweise ist sehr zeitaufwendig und damit kostenintensiv. Desweiteren wird relativ viel Material benötigt, da die vorhandenen Muffen und Aderverbindungsleisten nicht mehr verwendet werden.

Die US-A-4 817 282 offenbart eine Umschaltvorrichtung zum unterbrechungsfreien Umschalten von Adern eines Fernmeldekabels. Diese Vorrichtung besteht aus einer ersten Kontakteinrichtung, die mit störungsfreien Adern in Kontakt bringbar ist, und einer zweiten, mit der ersten Kontakteinrichtung in Kontakt stehenden Kontakteinrichtung, die mit den ankommenden beziehungsweise abgehenden Adern in Kontakt bringbar ist. Die Umschaltung erfolgt hierbei jeweils mit paarweisen Adern.

### DARSTELLUNG DER ERFINDUNG

Der vorliegenden Erfindung liegt das technische Problem bzw. die Aufgabe zugrunde, ein Verfahren der eingangs genannten Art und eine für den Einsatz in dieses Verfahren geeignete Umschaltvorrichtung anzugeben, das/die einen wirtschaftlichen Einsatz insbesondere hinsichtlich geringer Kosten durch deutlich geringere Arbeitszeit und deutlich geringeren Materialaufwand gewährleistet.

Das erfindungsgemäße Verfahren zeichnet sich demgemäß dadurch aus, daß an beiden Endbereichen (Spleißstellen) der alten bzw. ankommenden/abgehenden Adern unter Einsatz einer Umschaltsteckeinrichtung mit einer ersten und zweiten Kontakteinrichtung vorzunehmende Verfahrensschritte: a) elektrisch leitendes Anschließen von störungsfreien, temporären Adern an die erste Kontakteinrichtung, b) elektrisch leitendes Anschließen der zweiten Kontakteinrichtung an die ankommenden bzw. abgehenden Adern, wobei die erste Kontakteinrichtung elektrisch leitend mit der zweiten Kontakteinrichtung verbunden ist, c) Entfernen der alten Adern aus der bestehenden Adernverbindungsleisten-Einrichtung, d) Anschließen der neuen Adern in der bestehenden Adernverbindungsleisten-Einrichtung, e) Lösen der zweiten Kontakteinrichtung von den ankommenden bzw. abgehenden Adern und wahlweise f) Wiederholung der Verfahrensschritte b) bis e) an weiteren ankommenden bzw. abgehenden Adern ohne die temporären Adern zu wechseln oder g) Lösen der ersten Kontakteinrichtung von den neuen Adern zum Beenden des Umschaltverfahrens.

Eine bevorzugte erfindungsgemäße Weiterbildung des Verfahrens zeichnet sich durch an beiden Spleißstellen und an den verbleibenden bzw. wiederverwendbaren AVL vorzunehmende Verfahrensschritte aus: Anschließen von störungsfreien, temporären Adern an eine neue Adernverbindungsleisten-Einrichtung (AVL), Anschließen der ersten Kontakteinrichtung auf die Adernverbindungsleisten-Einrichtung zur Herstellung des Kontakts mit den temporären Adern, Anschließen der zweiten Kontakteinrichtung auf eine bestehende Adernverbindungsleisten-Einrichtung für die ankommenden bzw. abgehenden Adern zur Herstellung des Kontakts, Entfernen der alten Adern aus der bestehenden Adernverbindungsleisten-Einrichtung, wodurch genügend Arbeitsvorrat an der verbleibenden AVL entsteht, zum Einlegen in einen Spleißkamm, Anschließen der neuen Adern in der bestehenden Adernverbindungsleisten-Einrichtung, Lösen der Umschaltvorrichtung von der bestehenden Adernverbindungsleisten-Einrichtung und wahlweise Wiederholung der Verfahrensschritte ohne die temporären Adern zu wechseln oder Lösen der Umschaltvorrichtung von der neuen Adernverbindungsleiste.

Das erfinderische Arbeitsverfahren kann an Muffen angewendet werden, die bereits eine angeschlossene Adernverbindungsleiste am Fernmeldekabel aufweisen. Erfindungsgemäß wird der Muffenmantel sowie der Muffenkopf des wegfallenden Kabels entfernt und das neue Kabel vorbereitet.

Der erste Schritt des Verfahrens, nämlich das Vorsehen oder das Anschließen einer neuen Adernverbindungsleiste kann auch entfallen, falls nämlich ein Fernmeldekabel vorhanden ist, das bereits eine AVL aufweist, d.h. eine angeschlossene Adernverbindungsleisten-Einrichtung an den jeweiligen Adern aufweist oder ohne eine AVL angeschlossen werden soll.

Im Hauptkabelbereich hat das erfindungsgemäße Verfahren den Vorteil, daß der Muffenkopf am bleibenden Kabel bzw. alle anderen Bauteile der Muffe zum Verschließen der Muffe wieder verwendet werden können. Im Verzweigerkabelbereich kann die aufgeschrumpfte Muffe nicht wieder verwendet werden.

Insgesamt bietet das erfindungsgemäße Verfahren im Zusammenhang mit der erfindungsgemäßen Umschaltvorrichtung folgende Vorteile. Die vorhandenen Adernverbindungsleisten an den Verbindungsstellen (Spleißstellen) werden wieder verwendet. Es fällt kein entsprechender Abfall an. Beim Umschalten sind keine AVL U notwendig, da die bereits vorhandenen Adernverbindungsleisten (AVL) zum Umschalten eingesetzt werden können. Desweiteren ist von Vorteil, daß bei straffer Kabel- bzw. Adernführung das Nachsetzen entfällt und somit das sehr aufwendige und arbeitsintensive Verlängern der Adern mittels der DVA U bzw. AAKv (UPB) entfällt. Darüber hinaus muß bei den Muffen im Hauptkabelbereich nur der Muffenkopf am neuen Kabel hergestellt werden, die restlichen Muffenteile können wiederverwendet werden. In manchen Fällen liegt die Muffe ziemlich nah am Rand des Kabelschachtes. Ein Nachsetzen (wie bei dem derzeitig angewandten Verfahren) würde bedeuten, daß die neue Muffe zu nah an den abgehenden bzw. ankommenden Rohrzügen innerhalb des Kabelschachtes liegen würden. Die Folge ist, daß das neu einzuziehende Kabel eine Schachtlänge weiter verlegt werden muß. Bei dem erfindungsgemäßen Verfahren entfällt dieses Risiko. Die Muffe bleibt an der gleichen Stelle. Weiterhin wird erfindungsgemäß der Vorteil geboten, daß die Arbeitsvorgänge beim Einspleißen des neuen Kabels wesentlich vereinfacht werden, da in keinem Fall nachgesetzt werden muß, um einen Vorratsbogen zum Einlegen in die AVL U bzw. AVL zu bekommen.

Hinsichtlich der Kosten lassen sich durch das erfindungsgemäße Verfahren folgende Vorteile erzielen. An einer Verbindungsstelle wird der Einsatz einer bekannten AVL U und an der anderen Stelle der Einsatz einer weiteren AVL nicht mehr benötigt, da an die bereits vorhandenen AVL angeschlossen wird. Darüber hinaus lassen sich ca. 70 - 80 % der Kosten einer Hauptkabelmuffe vermeiden, da die bereits bestehende Hauptkabelmuffe größtenteils wiederverwendet werden kann. Bei straffer Kabelführung muß nicht mit einer DVA U bzw. AAKv (UPB) die Ader verlängert werden. Dadurch wird die sehr aufwendige Arbeit zum Verlängern eingespart. Bei einem Kabel mit ca. 1.000 (Doppel)-Adern sind dies mindestens ca. 40 Arbeitsstunden pro Verbindungsstelle, die sich einsparen lassen. Im Extremfall kann das Einziehen eines zusätzlichen Kabels bis zum nächsten Kabelschacht vermieden werden, wenn die vorhandene Muffe zu nah an den ankommenden bzw. abgehenden Rohrzügen liegt.

Da das erfindungsgemäße Verfahren mit der erfindungsgemäßen Umschaltvorrichtung wesentlich einfacher auszuführen ist, können Störungen im Fernmeldekabel deutlich schneller beseitigt werden, was letztendlich auch für den Benutzer Vorteile mit sich bringt, da die mit der Beseitigung von Störungen beauftragten Institutionen wesentlich schneller die Störung beseitigen können.

Die erfindungsgemäße Umschaltvorrichtung ist gekennzeichnet durch eine erste Kontakteinrichtung, die mit temporären störungsfreien Adern in Kontakt bringbar ist und eine zweite, mit der ersten Kontakteinrichtung in Kontakt stehenden Kontakteinrichtung, die mit den ankommenden bzw. abgehenden Adern in Kontakt bringbar ist. Eine vorteilhafte Weiterbildung zeichnet sich dadurch aus, daß die Umschaltvorrichtung eine erste Kontakteinrichtung mit Kontaktelementen und eine mit der ersten Kontakteinrichtung in Kontakt stehende zweite Kontakteinrichtung mit Kontaktelementen aufweist und die Umschaltvorrichtung so ausgebildet ist, daß in aufgestecktem Zustand die in den Prüföffnungen führbaren Kontaktelemente der ersten und/oder zweiten Kontakteinrichtung jeweils Kontakt mit den Kontakteinheiten der jeweiligen Adernverbindungsleisten-Einrichtungen herstellen.

Bevorzugt sind die Kontaktelemente als Stiftelemente ausgebildet, die in Richtung ihrer Längsachse verschiebbar und elastisch gelagert sind. Damit kann ein einwandfreier Kontakt bei aufgesteckter Umschaltvorrichtung auf die Adernverbindungsleisten-Einrichtung gewährleistet werden. Eine besonders einfache konstruktive Ausgestaltung zeichnet sich dadurch aus, daß die elastische Lagerung durch die Wirkung eines Federelements verwirklicht wird.

Eine hinsichtlich der rauhen Beanspruchung in der Praxis beim täglichen Betrieb geeignete Umschaltvorrichtung zeichnet sich dadurch aus, daß die Kontaktelemente jeweils in einem Hohlprofil längsverschieblich gelagert sind, wobei dieses Hohlprofil Beschädigungen der Kontaktelemente vermeidet, da es eine sehr hohe Steifigkeit in Kombination mit einer hohen Verschleißfestigkeit aufweist, so daß gewährleistet werden kann, daß der Aufsteckvorgang der Umschaltvorrichtung jederzeit problemlos durchgeführt werden kann. Eine Beschädigung bzw. Verbiegung der Kontaktelemente wird dadurch weitestgehend vermieden und eine dauerhafte und zuverlässige Funktion der Umschaltvorrichtung gewährleistet.

Um die einwandfreie Kontaktierung während des unterbrechungsfreien Umschaltvorgangs zu gewährleisten, hat es sich als günstig herausgestellt, eine Arretiervorrichtung vorzusehen, die die Adernverbindungsleisten-Einrichtung bevorzugt von oben und/oder unten und/oder seitlich umfaßt. Die Umfassung bzw. die Anordnung der Arretiereinrichtung ist hierbei so gewählt, daß der während des Verfahrens durchzuführende Austausch der alten zu ersetzenden Adern nicht behindert wird und gleichzeitig die Adernverbindungsleiste mit Umschaltvorrichtung in vorhandene, bekannte Spleißkämme eingelegt werden können, ohne daß die Arbeit des Einspleißens der neuen Adern behindert wird.

Eine kompakte Ausführungsform der erfindungsgemäßen Umschaltvorrichtung zeichnet sich dadurch aus, daß die erste Kontakteinrichtung und die zweite Kontakteinrichtung in einem Gehäuse vorhanden sind. Darüberhinaus kann es günstig sein, eine Umschaltvorrichtung vorzusehen, bei der eine Trennung der ersten und zweiten Kontakteinrichtung jeweils in einem separaten Gehäuse erfolgt, wobei die leitende Verbindung zwischen erster und zweiter Kontakteinrichtung durch ein dazwischen angeordnetes flexibles Kabel gewährleistet werden kann.

Hinsichtlich der Handhabbarkeit beim Herstellen der leitenden Verbindungen der neu einzulegenden Adern hat es sich als günstig herausgestellt, an der Umschaltvorrichtung eine Lagefixiereinrichtung vorzusehen, die zum zeitweisen lösbaren Fixieren der neu eingelegten Adern verwendet werden kann, welche Lage fixiereinrichtung bevorzugt als Spiraldrahtfeder ausgebildet ist.

Eine bevorzugte Ausgestaltung der erfindungsgemäßen Umschaltvorrichtung zeichnet sich dadurch aus, daß die erste bzw. zweite Kontakteinrichtung 20, 40, 50 Kontaktelemente oder ein Vielfaches der vorgenannten Werte aufweist.

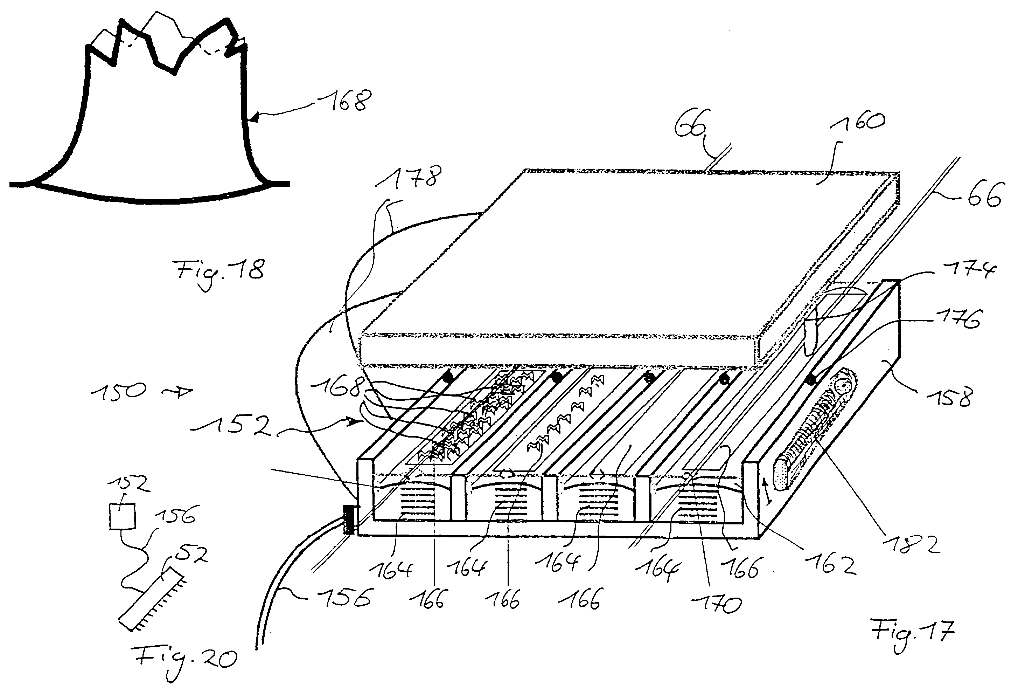

Eine besonders bevorzugte Weiterbildung der erfindungsgemäßen Umschaltvorrichtung, die auch eine Einsatzmöglichkeit bei äußerst straff gespannten Adern ermöglicht zeichnet sich dadurch aus, daß die erste Kontakteinrichtung und/oder die zweite Kontakteinrichtung Durchdringungselemente aufweist, die Kontakt mittels Durchdringen des Isoliermantels der jeweiligen Ader herstellen (Fig. 17).

Dabei hat es sich als direkt günstig herausgestellt, die Umschaltvorrichtung so auszubilden, daß die erste und/oder zweite Kontakteinrichtung eine Kontaktfläche mit vielen Kontaktspitzen aufweist, auf die die Adern jeweils fixiert wieder drückbar sind.

Zur Gewährleistung einer dauerhaften Kontaktherstellung hat es sich als günstig herausgestellt, die Kontaktfläche elastisch gelagert auszubilden, wobei bevorzugt ein Gummipolster oder Federelemente zum Einsatz kommen.

Hinsichtlich der Herstellung der Kontaktflächen zur Gewährleistung eines einwandfreien Kontaktes ist es besonders vorteilhaft, die Kontaktspitzen durch ausgestanzte Kraterspitzen auszubilden, was einerseits eine einfache und rationale Herstellung ermöglicht und andererseits eine zuverlässige Kontaktierung während des temporären Kontaktvorgangs ermöglicht.

Besonders vorteilhaft ist es, die Kontaktflächen lösbar befestigbar an der Kontakteinrichtung auszubilden, damit bei unvermeidlichen Abnutzungserscheinungen durch eine einfache Auswechslung der Kontaktflächen der Einsatz der Kontakteinrichtungen, d.h. der Umschaltvorrichtungen gewährleistet werden kann.

In einer weiteren erfindungsgemäßen Ausgestaltung weist die Umschaltvorrichtung, d.h die erst und/oder zweite Kontakteinrichtung rastermäßig vorhandene Kontaktelemente auf, auf die kontaktierend eine Adernverbindungsleisten-Einrichtung aufgesteckt werden kann. Dabei sind die Kontaktelemente bevorzugt als Stabelemente ausgebildet, die mit den Kontaktelementen der Adernverbindungsleisten-Einrichtung in Eingriff bringbar sind. Bevorzugt kommt hierbei eine Adernverbindungsleisten-Einrichtung zum Einsatz, die auf ihrer Einsteckseite keine Messerelemente aufweist, welche Leiste als AVL U bezeichnet wird. Bei aufgesteckter AVL U - Leiste können somit beliebig viele neue Adern auf der Oberseite der AVL U eingezogen und kontaktiert werden, je nachdem welche Adern gerade kontaktiert bzw. angeschlossen werden müssen.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Darstellung der Verbindungssituation zwischen Fernmeldeamt und Teilnehmer,
- Fig. 2: schematische Darstellung der Umschaltsituation gemäß dem bekannten Verfahren,
- Fig. 3: schematischer Aufbau einer bekannten Adernverbindungsleisten-Einrichtung unter Einsatz der erfindungsgemäßen Adaptervorrichtung,
- Fig. 4 bis 7: schematische Darstellungen des Verfahrens zum unterbrechungsfreien Umschalten unter Einsatz einer erfindungsgemäßen Umschaltvorrichtung,
- Fig. 7a, 7b: schematische Darstellung des Verfahrens im Überblick und Detail,
- Fig. 8: schematische Detailperspektive einer Umschaltvorrichtung und einer Adernverbindungsleisten-Einrichtung in teilweise aufgeschnittenem Zustand,
- Fig. 9: schematische Detaildraufsicht auf eine Umschaltvorrichtung mit einem einzigen Gehäuse,
- Fig. 10: schematische Schnittdarstellung der Umschaltvorrichtung und der Adernverbindungsleisten-Einrichtung gemäß der Anordnung nach Fig. 8,
- Fig. 11: schematische Detail-Schnittdarstellung eines Kontaktelements, welches federnd und längsverschieblich gelagert ist,
- Fig. 12: schematische Gesamt-Schnittdarstellung eines Kontaktelements, welches federnd und längsverschieblich gelagert ist,
- Fig. 13: schematische Draufsicht auf eine auf ein AVL aufgestellte Kontakteinrichtung,
- Fig. 14: schematischer Schnitt durch einen Spleißkamm mit eingelegten AVL mit Kontakteinrichtung,
- Fig. 15, 16: weiteres Ausführungsbeispiel einer Kontakteinrichtung in Vorderdetailschnittansicht und Längsschnitt,
- Fig. 17: schematische Perspektivdarstellung einer Kontakteinrichtung mit Kontaktflächen,
- Fig. 18: schematische Perspektivdarstellung eines Kontaktkraters,
- Fig. 19: schematische Schnittdarstellung der Kontakteinrichtung gemäß Fig. 17,
- Fig. 20: schematische Darstellung einer Umschaltvorrichtung mit einer Kontakteinrichtung gemäß Fig. 17 und einer Kontakteinrichtung gemäß Fig. 4 und
- Fig. 21: vereinfachte schematische Darstellung eines Knotenspleißes, der nicht unmittelbar nach seiner Herstellung wieder aufgelöst wird, falls eine AVL vorhanden ist,
- Fig. 22: vereinfachte schematische Darstellung eines Knotenspleißes, der nicht unmittelbar nach seiner Herstellung wieder aufgelöst wird, falls ein durchlaufendes Kabel vorhanden ist,
- Fig. 23: vereinfachte schematische Darstellung eines Knotenspleißes, der nicht unmittelbar nach seiner Herstellung wieder aufgelöst wird, mit einer AVL ohne Messereinrichtung und
- Fig. 24: schematischer Ausschnitt aus einem Netzplan mit einem über einen längeren Zeitraum aufrechtzuerhaltenden Knotenspleiß.

### WEGE ZUM AUSFÜHREN DER ERFINDUNG

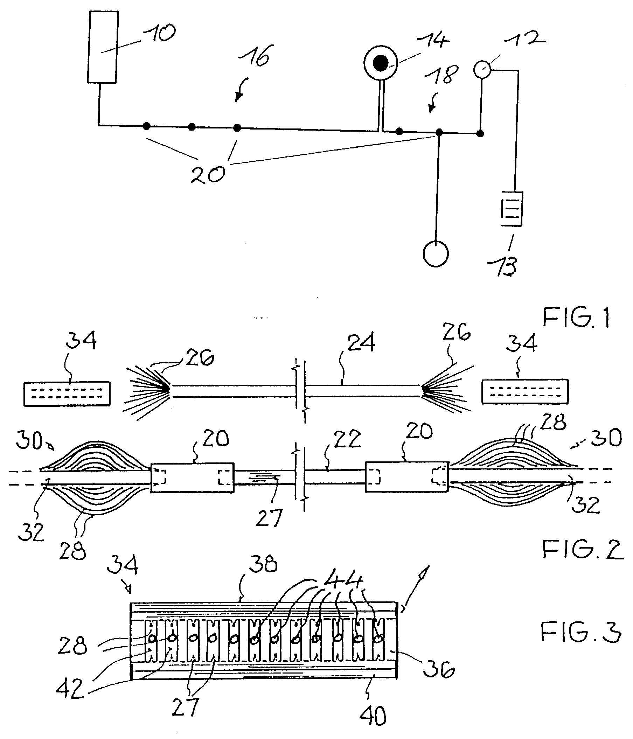

Fig. 1 zeigt schematisch den Verbindungsweg von einem Fernmeldeamt 10 zu einem Hausanschluß (APL) 12 bzw. einer Teilnehmereinheit 13. Zwischen das Fernmeldeamt 10 und die Teilnehmereinheit 13 ist eine Verteilereinheit 14 und ein Kabelendpunkt (APL) 12 geschaltet, wobei links von der Verteilereinheit 14 der Hauptkabelbereich 16 und rechts von der Verteilereinheit 14 der Verzweigerkabelbereich 18 vorhanden ist. Im Hauptkabelbereich 16 sind einzelne Verbindungsmuffen 20 vorhanden, innerhalb derer die Fernmeldekabel verbunden werden. Derartige Verbindungsmuffen sind auch im Verzweiger-Kabelbereich 18 vorhanden (nicht dargestellt).

Fig. 2 zeigt die Situation des Umschaltens von einem auszutauschenden Fernmeldekabel 22 mit Adern 27 auf ein neues Fernmeldekabel 24, das bereits im Bereich zwischen der jeweiligen Verbindungsmuffe 20 in einem Kabelkanal verlegt ist, und dessen Adern 26 an die Adern 28 der an die jeweilige Verbindungsmuffe 20 anschließenden Kabelbereiche angeschlossen werden muß. In einer Muffe 20 sind in der Regel eine Vielzahl von bekannten Adernverbindungsleisten-Einrichtungen vorhanden, die jeweils eine vorgegebene Anzahl von leitenden Verbindungen zwischen den ankommenden und abgehenden Adern elektrisch verbinden.

Nach dem bekannten Verfahren werden in der jeweiligen Verbindungsmuffe 20 die Adern 28 des jeweils ankommenden Fernmelde-kabels 32 in einem Vorratsbogen 30 auseinandergezogen. Die auseinandergezogenen Adern 28 werden dann in bekannte Adernverbindungsleisten-Einrichtungen 34 eingelegt und in elektrisch leitenden Kontakt mit ersten Kontakteinrichtungen 36 der Leiste der bekannten Adernverbindungsleisten-Einrichtungen 34 gebracht. Daran anschließend werden die Adern 26 des neuen Fernmeldekabels in die Adernverbindungsleisten-Einrichtung 34 eingelegt und in elektrisch leitenden Kontakt mit den Adern 28 gebracht. Dabei werden in einer Verbindungsmuffe 20 Adernverbindungsleisten-Einrichtungen eingesetzt, die auch einen unterbrechungsfreien Durchlauf (AVL U) der vorhandenen Adern gewährleisten. Sobald die Verbindung über die Adernverbindungsleisten-Einrichtung 34 hergestellt ist, kann das alte Fernmeldekabel 22 ausgetauscht bzw. die Adern desselben abgeschnitten werden, wobei die an dem alten Kabel vorhandenen Adernverbindungsleisten-Einrichtungen und Muffen dem Abfall anheimfallen, da sie nicht wieder verwendet werden.

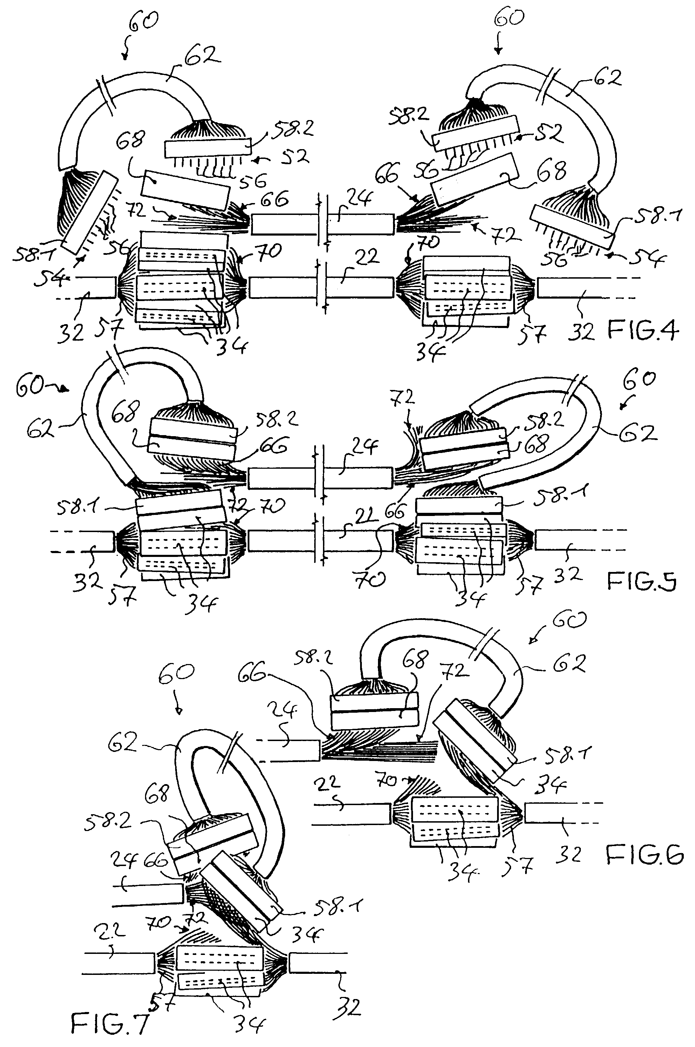

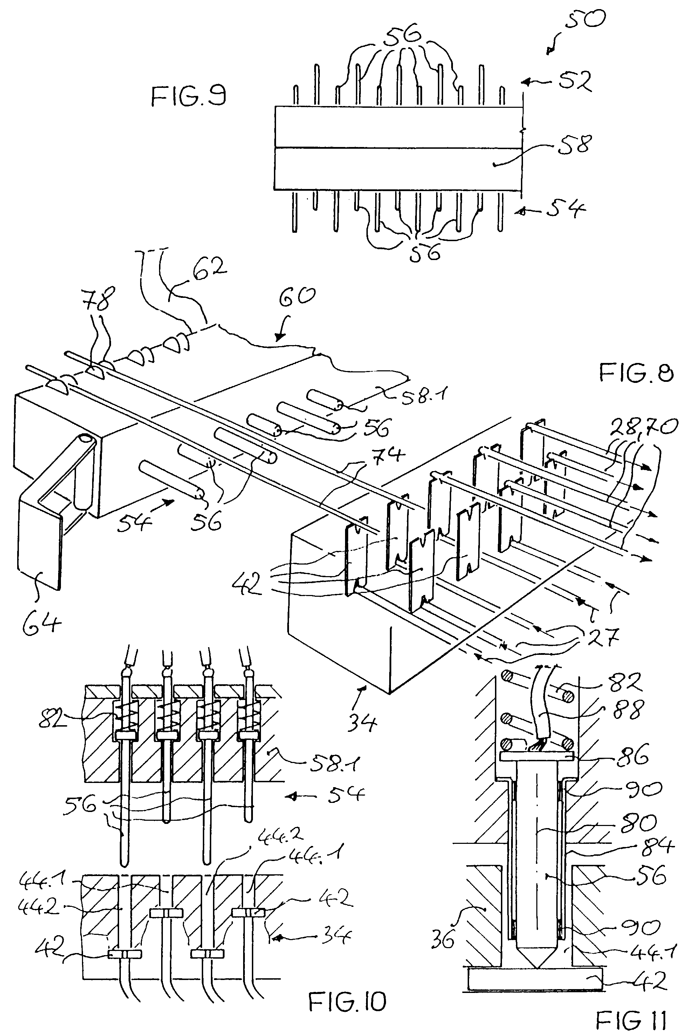

Gemäß Fig. 3 besteht eine bekannte Adernverbindungsleisten-Einrichtung 34 aus einer mittig angeordneten Aderverbindungsleiste 36 und einer auf der Oberseite vorhandenen Deckeleinheit 38 und einer auf der Unterseite vorhandenen Bodeneinheit 40. Die Aderverbindungsleiste 36 weist pro anzuschließende Ader eine erste Kontakteinrichtung 42 auf, an der die Adern 28 des ankommenden Fernmeldekabels 32 elektrisch leitend anschließbar sind und gleichzeitig die Adern des auszutauschenden Fernmeldekabels 22 elektrisch leitend angeschlossen sind. Die Adernverbindungsleiste 36 weist für jede Kontakteinheit 42 Prüföffnungen 44 auf, wodurch die Kontakteinheiten 42 von außen her punktuell zugänglich sind. Die Kontakteinheiten 42 sind in Längsrichtung gesehen zueinander versetzt vorhanden, so daß Prüföffnungen 44.1 und 44.2 mit unterschiedlicher Länge vorhanden sind (siehe Fig. 10).

Eine erste Form einer erfindungsgemäßen Umschaltvorrichtung 50 ist in Fig. 9 als Detailaufschnitt schematisch dargestellt. Die Umschaltvorrichtung 50 weist eine erste Kontakteinrichtung 52 und eine in leitendem Kontakt mit der ersten Kontakteinrichtung 52 stehende zweite Kontakteinrichtung 54 auf, welche Kontakteinrichtungen jeweils Kontaktelemente 56 aufweisen, welche in dem selben Rastermaß angeordnet sind wie die Prüföffnungen 44 der Adernverbindungsleiste 36. Beide Kontakteinrichtungen 52, 54 sind in einem gemeinsamen Gehäuse 58 untergebracht.

Die Länge der als Kontaktstifte ausgebildeten Kontaktelemente 56 entspricht im wesentlichen der Länge der jeweils zugeordneten Prüföffnung 44, wobei diese Kontaktelemente längsverschieblich gelagert sind und federnd gegen die Kontakteinheiten 42 in eingestecktem Zustand gepreßt werden, was weiter unten beschrieben wird.

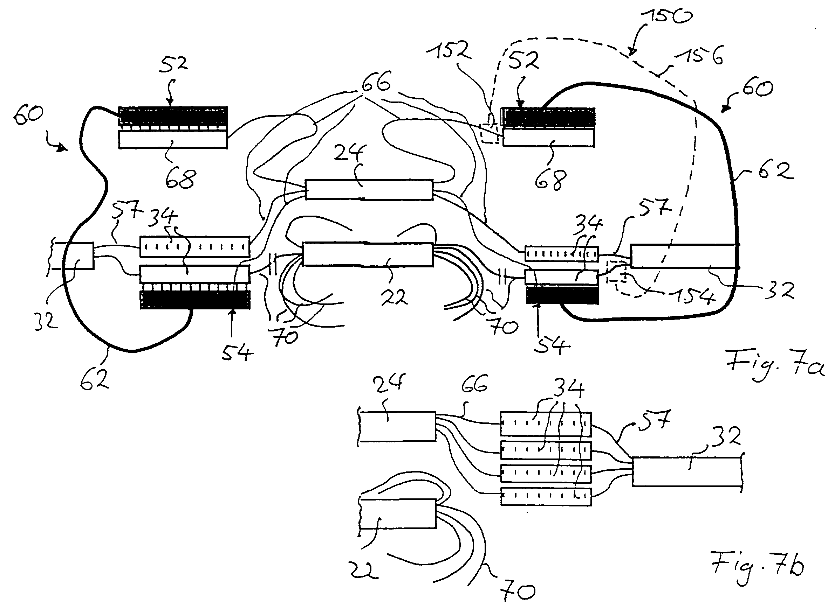

Der Einsatz einer zweiten erfindungsgemäßen Umschaltvorrichtung 60 im Rahmen des erfindungsgemäßen Verfahrens zum unterbrechungsfreien Umschalten ist in den Figuren 4 bis 7, 7a und 7b dargestellt. Eine Detailperspektive dieser Umschaltvorrichtung 60 zeigt die Fig. 8.

Bei der Umschaltvorrichtung 60 sind die Kontakteinrichtungen 52 und 54 mit ihren Kontaktelementen 56 jeweils in einem getrennten Gehäuse 58.1, 58.2 angeordnet, wobei die leitende Verbindung zwischen den beiden Kontakteinrichtungen 52, 54 durch ein dazwischen angeschlossenes flexibles Kabel 62 gewährleistet wird.

Schematisch ist in Fig. 8 noch eine an der Seitenwandung vorhandene Klemmeinrichtung 64 dargestellt, wodurch eine Lagesicherung der Umschaltvorrichtung im auf die Adernverbindungsleisten-Einrichtung 34 aufgesteckten Zustand gewährleistet werden soll. Diese Klemmeinrichtung 64 kann auch konstruktiv andersartig ausgebildet sein. Wesentlich ist bei der Ausbildung der Klemmeinrichtung, daß diese die Montage der Adern beim Umschaltverfahren nicht behindert und gleichzeitig die Adernverbindungsleisten-Einrichtung 34 mit aufgesteckter Umschaltvorrichtung 60 in bekannte Spleißkämme eingelegt werden kann.

Die Anzahl der Kontaktelemente 56 pro Umschaltvorrichtung pro Kontakteinrichtung ist abhängig von der Anzahl der Kontakteinheiten der jeweils umzuschaltenden Adernverbindungsleisten-Einrichtung. Bevorzugt werden Umschaltvorrichtungen mit zehn, zwanzig, vierzig oder fünfzig Kontaktelementen eingesetzt.

Das erfindungsgemäße Verfahren zum unterbrechungsfreien Umschalten wird nun im folgenden anhand der schematischen Darstellungen in den Figuren 4 bis 7, 7a + 7b erläutert.

Die jeweiligen Verfahrensschritte sind synchron in der jeweiligen Spleißstelle des neuen Fernmeldekabels 24 bzw. auszutauschenden Fernmeldekabels 22 durchzuführen. Eine Abstimmung zwischen den Montagepersonen kann beispielsweise über Kabeladerprüfgeräte erfolgen. Die temporären Umschaltadern werden bis Abschluß der Arbeiten beibehalten.

Ausgangssituation ist die, daß die ankommenden bzw. abgehenden Adern 57 der Fernmeldekabel 32 an die Adern 66 des neuen Fernmelde-Kabels 24 angeschlossen werden, d.h. die alten Adern 70 des alten Fernmeldekabels 22 ersetzt werden sollen, ohne daß eine Unterbrechung auftritt.

Nachdem an beiden Spleißstellen die Muffe geöffnet worden ist, sind die Adernverbindungsleisten-Einrichtungen 34 von außen her zugänglich. Es werden nun Adern 66 des neu anzuschließenden Fernmeldelkabels 24, welche Adern 66 nachfolgend temporäre Adern genannt werden, an eine Adernverbindungsleisten-Einrichtung (AVL) 68 in bekannter Art und Weise angeschlossen, indem die Boden- oder Deckeleinheit abgenommen wird, die Adern 66 eingelegt werden und anschließend die Deckel- bzw. Bodeneinheit wieder auf der Adernverbindungsleiste 68 aufgepreßt wird, wodurch die Adern 66 mit den Kontakteinheiten 42 der Adernverbindungsleisten-Einrichtung 68 in Kontakt kommen.

Nun ist die Ausgangssituation erreicht, in der die erfindungsgemäße Umschaltvorrichtung 60 zum Einsatz kommt. Es wird die erste Kontakteinrichtung 52 auf die AVL 68 aufgesteckt. Des weiteren wird die zweite Kontakteinrichtung 54 auf die AVL 34 aufgesteckt, an der die auszuwechselnden Adern 70 - nachfolgend alte Adern genannt - angeschlossen sind. Ist dies an beiden Spleißstellen des Fernmeldekabels 24 bzw. 22 geschehen, liegen zwei Dreieckschaltungen vor und der Telefonverkehr kann problemlos über die neu angeschlossenen temporären Adern 66 erfolgen.

Dann wird die Deckeleinheit bzw. Bodeneinheit der Adernverbindungsleisten-Einrichtung 34 gelöst und die alten Adern 70 werden entfernt. Nun können die neu anzuschließenden Adern 72 an die Adernverbindungsleiste 34 in bekannter Art und Weise angeschlossen werden, wobei der Anschluß üblicherweise in einem Spleißkamm mit anschließendem Verpressen der Boden- bzw. Deckeleinheit auf der Adernverbindungsleiste 34 erfolgt.

Nach dem Anschluß der neuen Adern 72 kann die zweite Kontakteinrichtung 54 von der Adernverbindungsleiste 34 abgezogen werden und es ist eine Verbindung der ankommenden bzw. abgehenden Adern 57 mit den neuen Adern 72 des neuen Fernmeldekabels 24 hergestellt. An keiner Stelle findet während des Verfahrens eine Unterbrechung der Verbindung der Adern statt. Nachdem nun die erste Adernverbindungsleiste 34 an die neuen Adern 72 angeschlossen ist, können die übrigen Adernverbindungsleisten 34 in der selben Art und Weise mit den neu anzuschließenden Adern des neuen Fernmeldekabels 24 angeschlossen werden.

Voraussetzung für das unterbrechungsfreie Umschalten ist, daß die Montagepersonen jeweils immer dieselben temporären Adern, alten Adern und neuen Adern anschließen bzw. lösen.

Das erfindungsgemäße Verfahren kann nicht nur eingesetzt werden, um die Adern neuer Fernmeldekabel unterbrechungsfrei anzuschließen, sondern auch, um innerhalb eines Fernmeldekabels die einzelnen Adern zu "schieben", d.h. eventuell gestörte oder beschädigte Adern unterbrechungsfrei umzuschalten auf störungsfreie Adern innerhalb desselben Fernmeldekabels.

Um die Lagefixierung der einzelnen Adern beim Anschließen mit aufgesteckter Umschaltvorrichtung zu gewährleisten, weist die Umschaltvorrichtung 60 gemäß Fig. 8 für jede Ader ein Klemmbackenpaar 78 auf, in dem die einzelne Ader während des Montagevorgangs lösbar geklemmt werden kann.

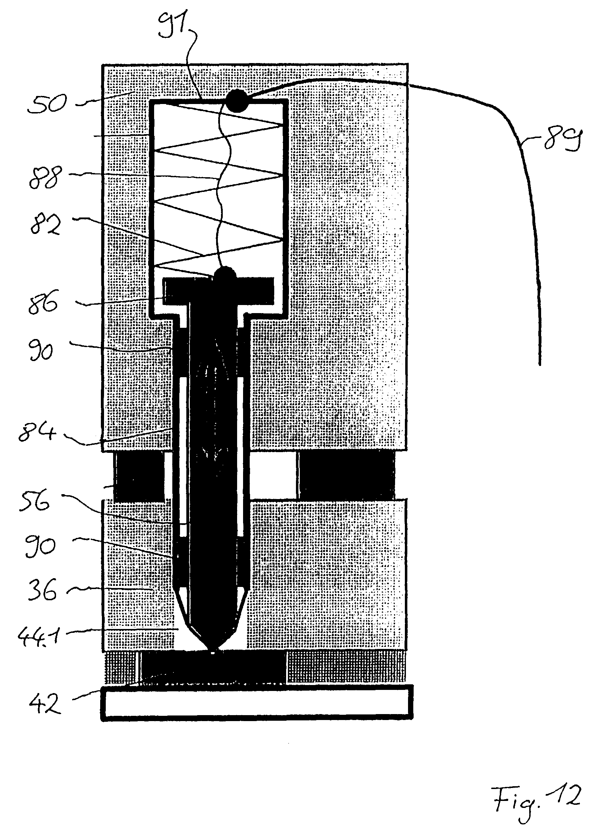

Um eine sichere Kontaktierung der Kontaktelemente 56 mit den Kontakteinheiten 42 bei aufgesteckter Umschaltvorrichtung 50 bzw. 60 zu gewährleisten, sind die Kontaktstifte 56 in Richtung ihrer Längsachse 80 verschieblich gelagert und stehen gleichzeitig unter der Wirkung eines elastischen Elements, insbesondere einer Feder 82. Eine mögliche Konstruktion für die federn längsgelagerten Kontaktstifte 56 ist in Fig. 11 schematisch dargestellt.

Das Kontaktelement 56 ist längsverschieblich in einer Hülse 84 geführt, die als Hohlprofil, vorzugsweise aus Keflar, ausgebildet ist. Das Kontaktelement 56 steht nur leicht über den vorderen Endbereich der Hülse 84 über. Im rückwärtigen Endbereich des Kontaktelements 56 ist eine Stirnplatte 86 angeformt, auf die die Feder 82 einwirkt. Gleichzeitig ist an die Stirnplatte 86 eine Leitung 88 angeschlossen. Die eine leitende Verbindung zur Kontakteinrichtung bzw. dem Kontaktelement auf der anderen Kontaktseite wird durch den Anschluß eines Kabels 89 mit Adern an die Leitung 88 gewährleistet, wobei der Anschlußpunkt auch über eine Endplatte 91 der Feder 82 kontaktiert wird (siehe Fig. 12).

Im vorderen bzw. hinteren Endbereich der Hülse 84 sind Lagereinheiten 90, bevorzugt aus Teflon, angeordnet, die eine einwandfreie Längsverschieblichkeit des Kontaktelements 56 gewährleisten.

Die Hülse 84 dient vornehmlich dazu, das Kontaktelement 56 während des rauhen Montagebetriebes vor Beschädigung zu schützen und ein Ausweichen des Kontaktelements 56 aus der Längsachsenrichtung 90 zu verhindern.

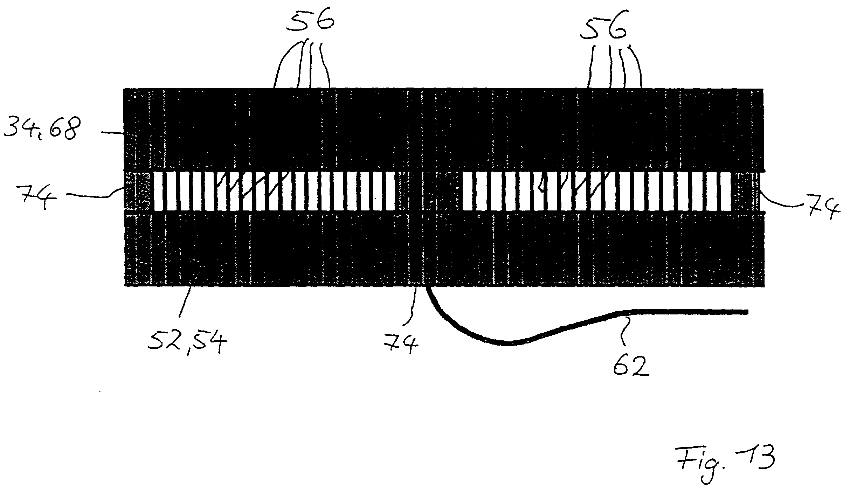

In Fig. 13 ist schematisch eine Draufsicht dargestellt, bei der eine Kontakteinrichtung 52, 54 auf eine Adernverbindungsleisten-Einrichtung 34, 68 gesteckt ist. Zwischen der Kontakteinheit und der Adernverbindungsleisten-Einrichtung sind in der Mitte und im Randbereich Abstandshalter 74 angeordnet, welche bevorzugt an die Kontakteinrichtung angeformt sind.

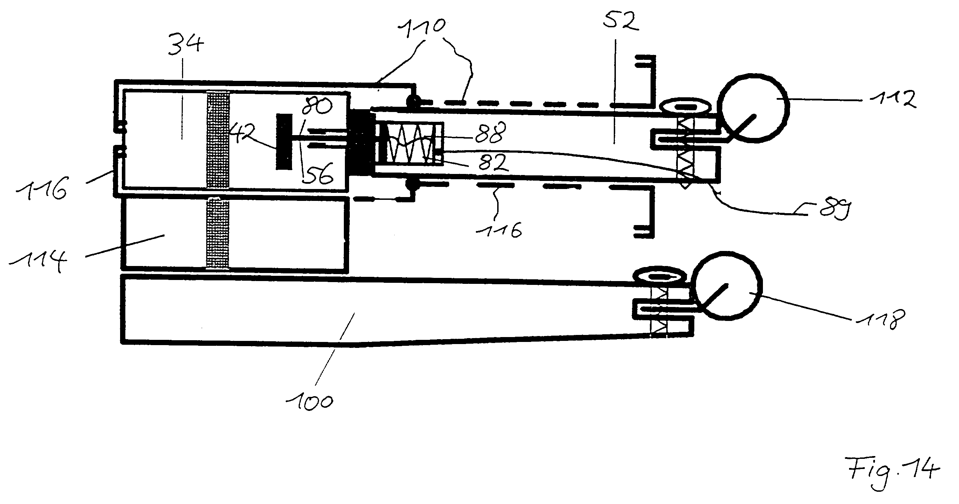

In Fig. 14 ist schematisch ein Schnitt durch einen Spleißkamm 100 bei eingelegter Adernverbindungsleisten-Einrichtung 34 mit eingesteckter Kontakteinrichtung 52. Hierbei sind zwei Fälle zu unterscheiden. Wenn die wegfallenden alten Adern unten (im Bodenbereich) liegen, ist über die ganze AVL ein Niveauausgleich gegeben, so daß dies in einfacher Art und Weise in einen Spleißkamm 100 eingelegt werden kann, so daß der Preßdruck beim Kontaktieren gleichmäßig auf die gesamte AVL 34 erfolgt. Die Arretierung wird über drehbare Arretierungselemente 110 bewirkt, die im Bereich der Mitte, dem linken und dem rechten Randbereich der AVL 34 umgeschlagen werden und an der AVL rastend einschnappen. In diesem Zustand können die neu einzulegenden Doppeladern problemlos in die AVL 34 eingelegt und mittels der als Spiralfeder 112 ausgebildeten Arretiereinrichtung arretiert werden.

Um Platz für das nicht benutzte untere Arretierungselement 116 zu schaffen, ist zwischen der AVL 34 und dem Spleißkamm 100 ein Abstandshalter 114 vorhanden.

Wenn die wegfallenden alten Doppeladern oben (im Deckelbereich) liegen, werden die Arretierungselemente 116 benutzt, um die Kontakteinrichtung 52 an der Adernverbindungsleiste 34 temporär zu fixieren. Die Arretierungselemente 116 sind prinzipiell gleich ausgebildet wie die Arretierungselemente 110. Die AVL liegt bei in dem Spleißkamm 100 eingesetzten Zustand mit ihrer gesamten unteren Fläche auf, so daß auch für diesen Fall ein gleichmäßiger Anpreßdruck zum kontaktieren der Doppeladern erzeugt werden kann. Die neuen Doppeladern werden nun in den Spleißkamm eingelegten Bodenteil 40 eingelegt und mit der als Spiralfeder 118 ausgebildeten Adernarretierung am Spleißkamm 100 fixiert und durch Verpressen kontaktiert. Ist die Kontaktierung an beiden Spleißstellen des Fernmeldekabels 24 bzw. 22 geschehen, liegen zwei Dreieckschaltungen vor und es kann begonnen werden, die alten Adern auszutauschen.

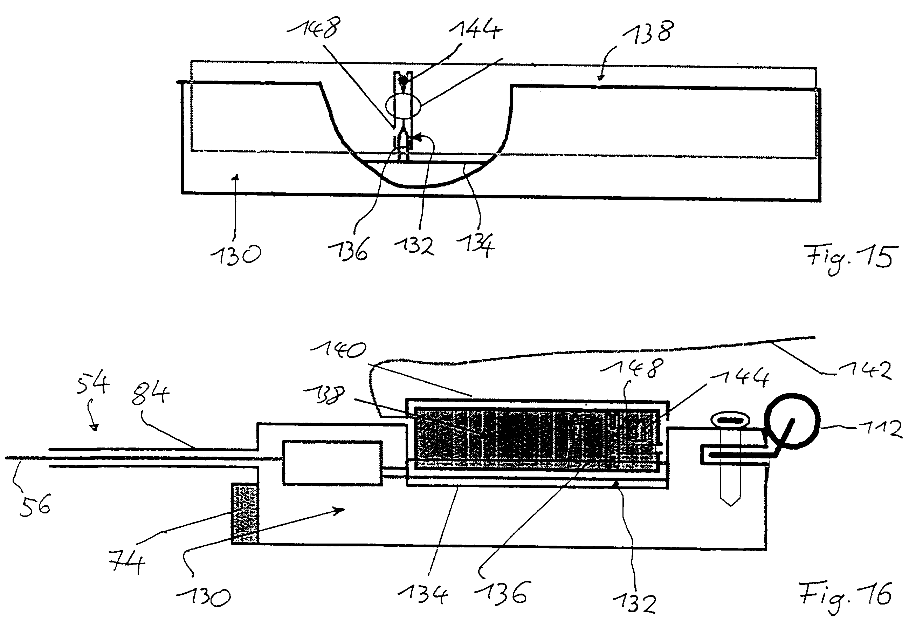

In den Figuren 15 und 16 ist schematisch eine weitere Variante einer erfindungsgemäßen Umschaltvorrichtung 130 dargestellt. Die erste Kontakteinrichtung 54 ist genauso ausgebildet wie die erste Kontakteinrichtung der seither beschriebenen Umschaltvorrichtungen und wird daher an dieser Stelle nicht nochmals beschrieben und erläutert. Gleiche Bauteile tragen das gleiche Bezugszeichen.

Die Umschaltvorrichtung 130 weist eine Ausnehmung 134 auf, in der die zweite Kontakteinrichtung 132 vorhanden ist. Die zweite Kontakteinrichtung 132 besteht aus über die gesamte Breite der Ausnehmung 134 am Boden verlaufenden Kontakteinheiten 136, welche jeweils in elektrisch leitender Verbindung mit den Kontaktelementen 56 der ersten Kontakteinrichtung 54 stehen. Dabei sind die Kontaktelemente 136 in einem derartigen Rastermaß angeordnet, das eine Adernverbindungsleisten-Einrichtung 138 eingesetzt werden kann, die auf Ihrer Unterseite keine Messerelemente enthält (AVL U). Dadurch werden die Kontaktelemente dieser AVL U mit den Kontaktelementen 136 kontaktiert. Entfernt man von der AVL U 138 ihre Deckeneinheit 140 können über oben aufgelegte Doppeladern 142 beliebige Verbindungen hergestellt werden.

In Fig. 7a ist schematisch gestrichelt eine weitere Ausführungsvariante einer erfindungsgemäßen Umschaltsteckeinrichtung 150 dargestellt. Diese weist eine erste Kontakteinrichtung 152, eine zweite Kontakteinrichtung 154 und ein eine leitende Verbindung zwischen den Kontakteinrichtungen herstellendes Verbindungskabel 156 auf. Die Kontakteinrichtungen selbst stehen in direktem Kontakt mit den jeweils einzelnen Adern, in dem in die die Ader jeweils umgebende Isolierhülle elektrisch leitende Bauteile eindringen, und so den Kontakt herstellen.

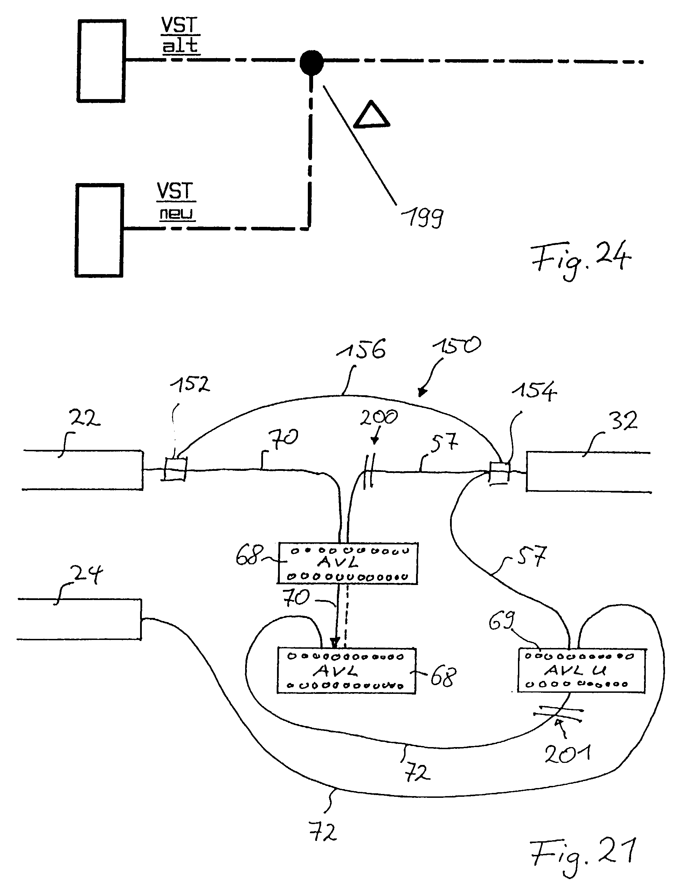

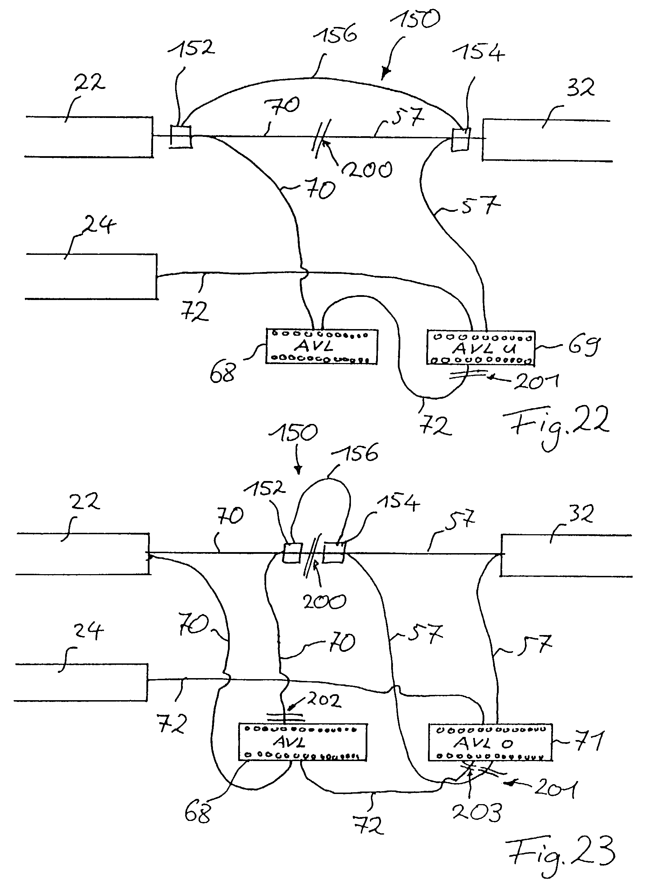

Derartige Kontakteinrichtungen 152, 154 können auch in Verbindung mit den Kontakteinrichtungen 52, 54 in einer Umschaltvorrichtung eingesetzt sein, was in der Fig. 20 schematisch dargestellt ist.

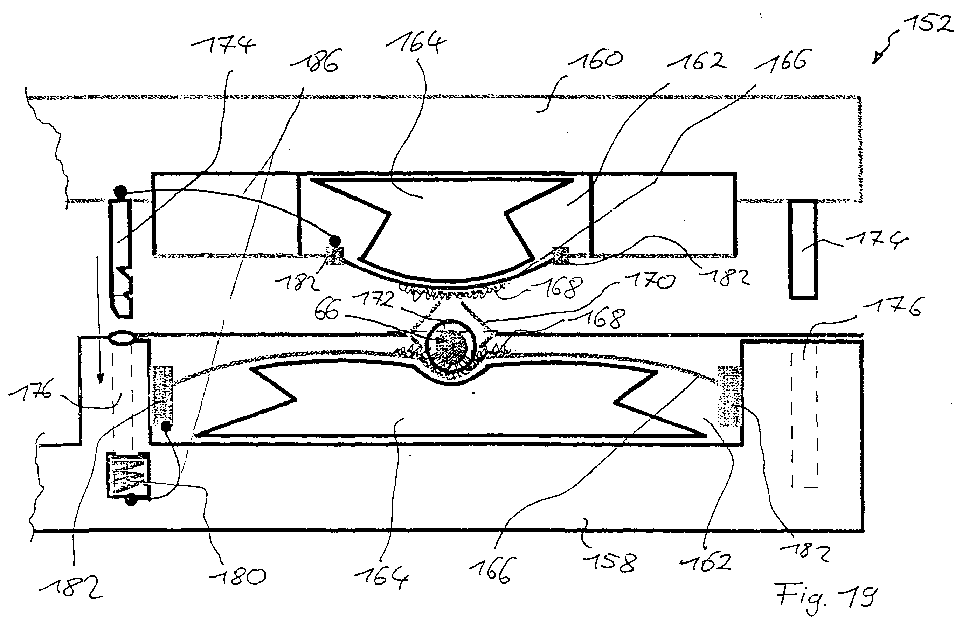

Eine schematische Detailperspektive einer Kontakteinrichtung 152 ist in Fig. 17 dargestellt. Die Kontakteinrichtung 152 weist eine Bodeneinheit 158 und eine Deckeleinheit 160 auf. Sowohl die Deckeleinheit 160 als auch die Bodeneinheit 158 weist in Längsrichtung verlaufende Ausnehmungen 162 auf, innerhalb derer elastische Elemente 164 angeordnet sind, die auf innerhalb der Ausnehmung 162 jeweils vorhandene Kontaktflächen 166 einwirken. Die Kontaktflächen 166 weisen nach außen ausgestanzte Kontaktkrater 168 auf (Fig. 18), die über die Fläche der Kontaktfläche 166 verteilt vorhanden sind und die in einfacher Art und Weise durch Stanzen hergestellt werden können. Insgesamt sind jeweils 4 Ausnehmungen 162 mit Kontaktflächen 166 vorhanden. Die Kontaktfläche kann auch nur deckel- oder bodenseitig vorhanden sein.

Das Herstellen des Kontaktes zu den einzelnen Adern 66 geschieht nun folgendermaßen. Zunächst wird jede Ader 66 in die jeweilige Ausnehmung 162 auf die entsprechende Kontaktfläche 166 eingebracht. Endseitig vorhandene Drahtfallen 170 erleichtern den Einlegevorgang. Sobald alle Adern 66 in die vier Ausnehmungen 162 eingelegt und fixiert sind, wird die Deckeleinheit 160 auf die Bodeneinheit 158 gepreßt. Dadurch wird die jeweilige Ader 66 zwischen die jeweiligen Kontaktflächen 166 gepreßt, wodurch die Kontaktkrater 168 die Isolierschicht 172 der Ader 66 durchdringen und in Kontakt mit dem leitenden Material der Ader 66 kommen. An der Deckeleinheit 160 sind Führungseinheiten 174 angeformt, die in entsprechend an der Bodeneinheit 158 vorhandenen Ausnehmungen 176 beim Aufsetzvorgang geführt werden.

Die Deckeleinheit 160 ist mit der Bodeneinheit 158 über flexible Bänder 178 verbunden.

Bestimmte Führungseinheiten 174 sind als Deckelfallen ausgebildet, die zweistufig lösend rastbar beim Anpressvorgang der Deckeneinheit 160 auf die Bodeneinheit 158 in in den Ausnehmungen 176 vorhandene Rastnasen einrasten. Diese Deckelfallen werden beim Anpressen entgegen der Wirkung einer Feder 180 verschoben.

Sobald der Umschaltvorgang beendet ist wird die Rastverbindung der Deckelfalle gelöst wird, was beispielsweise über einen Drehhebel 182 erfolgen kann, bewegt sich die Bodeneinheit 158 automatisch von der Deckeleinheit 160 weg, wodurch die Kontaktverbindung gelöst wird und die Kontakteinrichtung entnommen werden kann. Die Spitzen der Krater 168 sind infolge ihrer sehr feinen Struktur so gering, daß sich die Durchdringungsbereiche des elastischen Isoliermantels 172 nach dem Lösen der Adern 66 von den Kontaktflächen 166 sich wieder schließen und praktisch keine stark schädigende Verletzung der Isolierschicht zurück bleibt.

Die Kontaktflächen 166 sind lösbar in den Ausnehmungen 162 angeordnet, so daß sie jederzeit ausgetauscht werden können, sofern die Kontaktkrater 168 einen gewissen Stumpfheitsgrad erreicht haben und ein einwandfreies Durchdringen der Isolierschichten nicht mehr gewährleistet werden kann. Die Kontaktflächen 166 werden elektrisch leitend über Verbindungsadern 186 nach außen geführt, welche in einem gemeinsamen Kabel 156 gesammelt werden. Hierbei ist es in dem Ausführungsbeispiel so, daß bei der unteren Kontaktfläche 166 der elektrische Kontakt zunächst über die Lagerkonstruktion 182 der Kontaktfläche 166 erfolgt, an die die Verbindungsader 186 angeschlossen ist. Die Verbindungsader 186 ist weiterhin an die metallische Spiraldruckfeder 180 angeschlossen, welche elektrisch leitend bei eingesteckter Bodeneinheit an die Deckelfalle 184 angeschlossen ist. An diese Deckelfalle 184 ist auch die Kontaktfläche 166 der Deckeleinheit 160 leitend angeschlossen. Dieser Kontaktpunkt wird nach außen leitend in dem Verbindungskabel 186 herausgeführt.

Bei dem dargestellten Ausführungsbeispiel weist die Kontakteinrichtung 152 vier Kontaktanschlußmöglichkeiten für vier Adern 66 auf. Die Anzahl der anzuschließenden Adern kann problemlos erhöht werden. Dies ist vom jeweiligen Einzelfall abhängig und wird von vorgegebenen Bedingungen festgelegt.

Mit der erfindungsgemäßen Umschaltvorrichtung läßt sich in einfacher Art und Weise elektrisch leitendender Kontakt zu Adern herstellen, in dem diese in einfacher Art und Weise lediglich in die Kontakteinrichtungen eingelegt werden und diese mit ihren Boden- bzw. Deckeleinheiten aufeinander verpreßt werden.0000 Infolge der mit Kratern versehenen Kontaktflächen ist eine einwandfreie Kontaktierung gewährleistet. Mit derartigen Kontakteinrichtungen ist es möglich, Kontakt zu schalten bei äußerst straff verlegten Adern, ohne daß Vorratsbögen geschaffen werden müssen. Des weiteren kann die erfindungsgemäße Umschaltsteckeinrichtung in dem Fall eingesetzt werden, in dem Adern innerhalb eines straff geführten Fernmeldekabels selbst umzuschalten, d.h. zu schieben, sind. Die erfindungsgemäße Lehre ist nicht auf die dargestellten Umschaltvorrichtungen beschränkt. Dem Fachmann erschließen sich aufgrund der dargestellten erfinderischen Lehre vielfältige Konstruktionsmöglichkeiten, erfindungsgemäße Umschaltvorrichtungen auszubilden.

In Fig. 24 ist schematisch ein Ausschnitt aus einem Netzplan dargestellt, der einen Knotenspleiß 199 zeigt, der nicht unmittelbar nach seiner Herstellung wieder aufgelöst wird, falls die Dreieckschaltung über längere Zeiträume benötigt wird. Sinn einer solchen Verbindung ist es, in diesem Fall das Ersatzschalten einer neuen Vermittlungsstelle (VST) mit der bestehenden Kabelanbindung einer bestehenden Vermittlungsstelle. Die Um- bzw. Einschaltung einer neuen Vermittlungsstelle kann sich über Monate hinziehen. Erst nach der endgültigen Inbetriebnahme der neuen Vermittlungsstelle kann der Knotenspleiß 199 aufgelöst werden. Der Knotenspleiß 199 muß daher in einer beständigen und gesicherten Form (Muffenmontage) gefertigt sein.

In den Fig. 21 bis 23 sind unterschiedliche Verfahren der Herstellung des Knotenspleißes 199 angegeben. Aus Vereinfachungsgründen ist die Darstellung lediglich an einer Ader im Kabel dargestellt. In der Praxis betrifft dies eine Vielzahl von einzelnen Adern. Gleiche Bauteile tragen das gleiche Bezugszeichen und werden nicht nochmals erläutert.

Gemäß Fig. 21 ist zwischen einem ankommenden Kabel 22 und einem abgehenden Kabel 32 bereits eine Adernverbindungsleisten-einrichtung (AVL) 68 vorhanden. Das Kabel 22 soll langfristig durch das Kabel 24 ersetzt werden. Zunächst wird die Umschaltsteckeinrichtung 150 mit der ersten Kontakteinrichtung 152 bzw. der zweiten Kontakteinrichtung 154 im Endbereich auf die Adern 70 bzw. 57 des ankommenden Kabels 22 bzw. abgehenden Kabels 32 kontaktierend aufgeklemmt. Über die Ader 156 ist eine leitende Verbindung hergestellt. Danach kann die zwischen den Kabeln 22 und 32 verlaufende Ader (70, 57) an der Stelle 200 durchtrennt werden. Die Ader 57 des abgehenden Kabels 32 wird dann in eine AVL U 69 oben eingelegt. Gleichzeitig wird die Ader 72 des neuen Kabels 24 unten in die AVL U 69 eingelegt. Die Ader 72 läuft durch die AVL U 69 hindurch, ohne daß sie beim Verpressen der AVL U 69 durchtrennt wird. Eine leitende Verbindung zwischen Ader 72 und Ader 57 ist nun hergestellt. Dann kann in der bestehenden AVL 68 die Ader 57 entfernt werden. An deren Stelle wird dann die durch die AVL U 69 durchlaufende Ader 72 des neuen Kabels 24 eingelegt. Nach dem Verpressen der AVL 68 ist leitender Kontakt zwischen der Ader 70 und 72 hergestellt und die Umschaltsteckvorrichtung 150 kann entfernt werden. Eine beständige Dreiecksschaltung liegt nun in gesicherter Form vor. Falls die Verbindung vom neuen Kabel 24 zum abgehenden Kabel 32 alleine nur noch aufrecht erhalten werden soll, wird die Ader 72 an der Stelle 201 durchtrennt. Insgesamt ist somit ein unterbrechungsfreies Herstellen eines Knotenspleißes problemlos mittels des Einsatzes der erfindungsgemäßen Umsteckvorrichtung 150 gewährleistet.

In Fig. 22 ist die Situation so, daß zwischen ankommendem Kabel 22 und abgehendem Kabel 32 keine AVL vorhanden ist. Ähnlich wie oben beschrieben wird die Umschaltsteckvorrichtung 150 kontaktierend auf die Adern 57 bzw. 70 aufgesteckt. Nach Durchtrennen an der Stelle 200 kann die Ader 57 in eine AVL U 69 oben eingelegt werden. Die Ader 72 des neuen Kabels 24 wird unten in die AVL U 69 eingelegt, läuft durch und wird an eine neue AVL 68 angeschlossen. Gleichzeitig wird die Ader 70 an diese AVL 68 angeschlossen und die AVL 68 verpreßt, wodurch leitender Kontakt zwischen Ader 70 und 72 hergestellt wird. Danach kann die Umschaltsteckvorrichtung 150 entfernt werden und es ist wiederum ein Knotenspleiß vorhanden, der beständig und in gesicherter Form vorliegt. Wird definitiv auf das neue Kabel 24 umgeschaltet, ist lediglich die Ader 72 an der Stelle 201 zu durchtrennen.

In Fig. 23 ist ebenfalls ein durchlaufendes Kabel (ankommendes Kabel 22 und abgehendes Kabel 32) vorhanden. Die Umschaltsteckvorrichtung 150 wird im mittleren Bereich zwischen den Adern 70 und 57 aufgesteckt. Nach dem Durchtrennen an der Stelle 200 wird die Ader 57 in eine AVL 70 eingelegt, die sowohl oben als auch unten keine Messer aufweist. Gleichzeitig wird die Ader 72 des neuen Kabels 24 in die AVL O 71 unten durchlaufend eingelegt. Nach dem Verpressen der AVL O 71 laufen durch diese die Adern 57 und 72, ohne Unterbrechung aber miteinander leitend verbunden, hindurch. Die Ader 72 wird in die AVL 68 unten eingelegt. Gleichzeitig wird die Ader 70 in die AVL 68 oben eingelegt. Durch das Verpressen der AVL 68 wird die zwischen der Umschaltsteckvorrichtung 150 und der AVL 68 verlaufende Ader 70 in der AVL 68 durchtrennt, was in Fig. 23 symbolisch durch den Schnitt 202 dargestellt ist. Eine elektrisch leitende Verbindung zwischen Ader 70 und Ader 72 ist hergestellt. Dann wird unterhalb der AVL O an der Stelle 203 die Ader 57 durchtrennt. Nun ist die Umschaltsteckeinrichtung 150 freigeschnitten. In diesem Zustand ist eine Dreiecksschaltung in beständiger und gesicherter Form vorhanden. Soll die Umschaltung allein auf das Kabel 24 als neues Kabel hin zum abgehenden Kabel 32 erfolgen, wird die Ader 57 an der Stelle 201 einfach durchtrennt. Der Einsatz einer AVL O 71, die keine Messer aufweist, ermöglicht es, das Umschaltverfahren so zu gestalten, daß bei Entfallen des alten Kabels die dann noch bestehenden Adern 72 bzw. 57 nicht von der Umschaltsteckvorrichtung 150 kontaktiert worden sind und somit auch keinerlei mechanische Beschädigungen aufweisen können.

Falls zwischen ankommendem Kabel 22 und abgehendem Kabel 32 eine AVL vorhanden ist, wird entsprechend der Verfahrensweise gem. Fig. 21 unter Einsatz einer AVL O ohne Messer verfahren.

## Patentansprüche

1. Verfahren zum unterbrechungsfreien Umschalten von auszutauschenden, alten Adern eines Fernmeldekabels auf störungsfreie, neue Adern eines, bevorzugt neuen, Fernmeldekabels, wobei die Verbindung zwischen ankommenden und abgehenden Adern eines Fernmeldekabels mittels einer Adernverbindungsleisten-Einrichtung (AVL), innerhalb derer die ankommenden bzw. abgehenden Adern an die alten Adern angeschlossen sind, erfolgt,
**gekennzeichnet durch**
an beiden Endbereichen (Spleißstellen) der alten bzw. ankommenden/abgehenden Adern unter Einsatz einer Umschaltsteckeinrichtung mit einer ersten und zweiten Kontakteinrichtung vorzunehmende Verfahrensschritte:
a) elektrisch leitendes Anschließen von störungsfreien, temporären Adern an die erste Kontakteinrichtung,
b) elektrisch leitendes Anschließen der zweiten Kontakteinrichtung an die ankommenden bzw. abgehenden Adern, wobei die erste Kontakteinrichtung elektrisch leitend mit der zweiten Kontakteinrichtung verbunden ist,
c) Entfernen der alten Adern aus der bestehenden Adernverbindungsleisten-Einrichtung,
d) Anschließen der neuen Adern in der bestehenden Adernverbindungsleisten-Einrichtung,
e) Lösen der zweiten Kontakteinrichtung von den ankommenden bzw. abgehenden Adern und
wahlweise
f) Wiederholung der Verfahrensschritte b) bis e) an weiteren ankommenden bzw. abgehenden Adern ohne die temporären Adern zu wechseln
oder
g) Lösen der ersten Kontakteinrichtung von den neuen Adern zum Beenden des Umschaltverfahrens.

2. Verfahren nach Anspruch 1,
**gekennzeichnet durch**
folgende Verfahrensschritte:
a) Anschließen von störungsfreien, temporären Adern an eine neue Adernverbindungsleisten-Einrichtung,
b) Anschließen der ersten Kontakteinrichtung an die neue Adernverbindungsleisten-Einrichtung zur Herstellung des Kontakts mit den temporären Adern,
c) Anschließen einer zweiten Kontakteinrichtung an eine bestehende Adernverbindungsleisten-Einrichtung für die alten Adern zur Herstellung des Kontakts,
d) Entfernen der alten Adern aus der bestehenden Adernverbindungsleisten-Einrichtung,
e) Anschließen der neuen Adern in der bestehenden Adernverbindungsleisten-Einrichtung,
f) Lösen der zweiten Kontakteinrichtung von der bestehenden Adernverbindungsleisten-Einrichtung und
wahlweise
g) Wiederholung der Verfahrenschritte c) bis f) an weiteren ankommenden bzw. abgehenden Adern ohne die temporären Adern zu wechseln
oder
h) Lösen der ersten Kontakteinrichtung von der neuen Adernverbindungsleiste.

3. Verfahren nach Anspruch 2,
**dadurch gekennzeichnet, daß**
die Umschaltvorrichtung nach dem Aufstecken auf die jeweilige Adernverbindungsleiste in ihrer Lage zu dieser lösbar gesichert wird.

4. Verfahren nach einem oder mehreren der vorstehenden Ansprüche,
**dadurch gekennzeichnet, daß**
die Verfahrensschritte i. w. synchron an beiden Enden der temporären, alten bzw. neuen Adern durchgeführt werden.

5. Verfahren nach einem oder mehreren der vorstehenden Ansprüche,
**dadurch gekennzeichnet, daß**
als temporäre Adern unbeschädigte Adern eines neuen Kabels, die nicht beschalteten Adern eines alten Kabels, die zugänglichen Adern eines benachbarten Kabels oder die Adern eines Hilfskabels verwendet werden.

6. Umschaltvorrichtung (50; 60; 130; 150) für eine Aderverbindungsleisten-Einrichtung (34; 68) zum unterbrechungsfreien Umschalten von Adern (26) eines Fernmeldekabels (24), wobei bevorzugt die Aderverbindungsleisten-Einrichtung (34) eine Aderverbindungsleiste (36), eine Bodeneinheit (40) und eine Deckeleinheit (38) aufweist und die Aderverbindungsleiste (36) Kontakteinheiten (42) zum jeweiligen Anschließen der ankommenden/abgehenden Ader (27; 28) eines ankommenden/abgehenden Fernmeldekabels (32; 22) besitzt zum Herstellen eines elektrischen Kontaktes der jeweiligen ankommenden und abgehenden Adern (27, 28) und für jede Kontakteinheit eine nach außen offene Prüföffnung (44) vorhanden ist,
**dadurch gekennzeichnet, daß**
die Umschaltvorrichtung (50; 60) eine erste Kontakteinrichtung (52) mit Kontaktelementen (56) und eine mit der ersten Kontakteinrichtung (52) in Kontakt stehende zweite Kontakteinrichtung (54) mit Kontaktelementen (56) aufweist und die Umschaltvorrichtung (50; 60) so ausgebildet ist, daß in aufgestecktem Zustand die in den Prüföffnungen (44) führbaren Kontaktelemente (56) der ersten und/oder zweiten Kontakteinrichtung jeweils Kontakt mit den Kontakteinheiten (42) der jeweiligen Adernverbindungsleisten-Einrichtung (34; 68) herstellen.

7. Vorrichtung nach Anspruch 6,
**dadurch gekennzeichnet, daß**
die Kontaktelemente als Stiftelemente (56) ausgebildet sind.

8. Vorrichtung nach Anspruch 6 oder 7,
**dadurch gekennzeichnet, daß**
die Kontaktelemente (56) in Richtung ihrer Längsachse (80) verschiebbar ausgebildet und elastisch gelagert sind.

9. Vorrichtung nach Anspruch 8,
**dadurch gekennzeichnet, daß**
die Kontaktelemente (56) unter der Wirkung eines Federelements (82) stehen.

10. Vorrichtung nach einem oder mehreren der vorstehenden Ansprüche 6 bis 9,
**dadurch gekennzeichnet, daß**
die Kontaktelemente (56) jeweils in einem Hohlprofil (84) längsverschieblich gelagert sind.

11. Vorrichtung nach einem oder mehreren der vorstehenden Ansprüche 6 bis 10,
**dadurch gekennzeichnet, daß**
eine Arretiervorrichtung (64; 110; 116) vorhanden ist, die die Umschaltvorrichtung (60) bzw. die Kontakteinrichtung (52, 54) in aufgestecktem Zustand an der Adernverbindungsleisten-Einrichtung (34) lösbar arretiert, wobei die Arretiervorrichtung (64; 110; 116) die Adernverbindungsleisten-Einrichtung (34) bevorzugt bereichsweise von oben und/oder unten und/oder seitlich umgreift.

12. Vorrichtung nach einem oder mehreren der vorstehenden Ansprüche 6 bis 11,
**dadurch gekennzeichnet, daß**
die erste Kontakteinrichtung (52) und die zweite Kontakteinrichtung (54) in einem Gehäuse (58) vorhanden sind (Fig. 9).

13. Vorrichtung nach einem oder mehreren der Ansprüche 6 bis 11,
**dadurch gekennzeichnet, daß**
die erste und die zweite Kontakteinrichtung (52; 54) in getrennten Gehäusen (58.1, 58.2) vorhanden sind und zwischen den Gehäusen ein flexibles Kabel (62) vorhanden ist.

14. Vorrichtung nach einem oder mehreren der vorstehenden Ansprüche 6 bis 13,
**dadurch gekennzeichnet, daß**
eine Lagefixiereinrichtung (78) vorhanden ist zum zeitweisen lösbaren Fixieren der neu einzulegenden Adern.

15. Vorrichtung nach einem oder mehreren der vorstehenden Ansprüche 6 bis 14,
**dadurch gekennzeichnet, daß**
die erste bzw. zweite Kontakteinrichtung 20, 40, 50 Kontaktelemente oder ein Vielfaches der vorgenannten Werte aufweist.

16. Vorrichtung (150) nach einem oder mehreren der Ansprüche 6, 13, 14, 15,
**dadurch gekennzeichnet, daß**
die erste Kontakteinrichtung (152) und/oder die zweite Kontakteinrichtung (154) Durchdringungselemente aufweist, die Kontakt mittels Durchdringen des Isoliermantels der jeweiligen Ader herstellen (Fig. 17).

17. Vorrichtung nach Anspruch 16,
**dadurch gekennzeichnet, daß**
die erste und/oder zweite Kontakteinrichtung (152, 154) eine Kontaktfläche (166) mit vielen Kontaktspitzen aufweist, auf die die Adern jeweils fixiert niederdrückbar sind.

18. Vorrichtung nach Anspruch 17,
**dadurch gekennzeichnet, daß**
die Kontaktfläche (166) elastisch gelagert ist.

19. Vorrichtung nach Anspruch 17,
**dadurch gekennzeichnet, daß**
die Kontaktspitzen durch ausgestanzte Kraterspitzen (168) gebildet werden.

20. Vorrichtung nach einem oder mehreren der Ansprüche 6, 16 bis 19,
**dadurch gekennzeichnet, daß**
die Kontakteinrichtungen (152, 154) lösbar an der Umschaltvorrichtung (150) befestigbar ist.

21. Vorrichtung nach einem oder mehreren der Ansprüche 17 bis 20,
**dadurch gekennzeichnet, daß**
an einer Kontakteinrichtung (152, 154) zumindest vier Kontaktflächen vorhanden sind.

22. Vorrichtung (130) nach einem oder mehreren der Ansprüche 6 bis 15,
**dadurch gekennzeichnet, daß**
die zweite Kontakteinrichtung rastermäßig vorhandene Kontaktelemente aufweist, auf die kontaktierend eine Aderverbindungsleisten-Einrichtung kontaktierend aufgesteckt werden kann.

## Claims

1. A process for the uninterrupted changeover of old wires to be exchanged of a telecommunications cable for undisturbed new wires of a, preferably new, telecommunications cable, the connection between incoming and outgoing wires of a telecommunications cable being carried out by means of a wire connecting strip device (AVL), within which the incoming and outgoing wires are connected to the old wires, which comprises process steps to be undertaken at both end regions (splice points) of the old or incoming/outgoing wires, using a changeover plug-in device having a first and second contact device:
a) electrically conductive connection of undisturbed, temporary wires to the first contact device,
b) electrically conductive connection of the second contact device to the incoming and outgoing wires, the first contact device being electrically conductively connected to the second contact device,
c) removal of the old wires from the existing wire. connecting strip device,
d) connection of the new wires in the existing wire connecting strip device,
e) detachment of the second contact device from the incoming and outgoing wires and
optionally
f) repetition of the process steps b) to e) on further incoming or outgoing wires, without changing the temporary wires
or
g) detachment of the first contact device from the new wires in order to complete the changeover process.

2. The process as claimed in claim 1, which comprises the following process steps:
a) connection of undisturbed, temporary wires to a new wire connecting strip device,
b) connection of the first contact device to the new wire connecting strip device in order to produce the contact with the temporary wires,
c) connection of a second contact device to an existing wire connecting strip device for the old wires to produce the contact,
d) removal of the old wires from the existing wire connecting strip device,
e) connection of the new wires in the existing wire connecting strip device,
f) detachment of the second contact device from the existing wire connecting strip device and
optionally
g) repetition of the process steps c) to f) on further incoming or outgoing wires, without changing the temporary wires
or
h) detachment of the first contact device from the new wire connecting strip.

3. The process as claimed in claim 2, wherein the changeover device, after being plugged onto the respective wire connecting strip, is detachably secured in its position in relation to the latter.

4. The process as claimed in one or more of the preceding claims, wherein the process steps are carried out essentially synchronously at both ends of the temporary, old or new wires.

5. The process as claimed in one or more of the preceding claims, wherein as temporary wires, undamaged wires of a new cable, the unconnected wires of an old cable, the accessible wires of an adjacent cable or the wires of an auxiliary cable are used.

6. A changeover device (50; 60; 130; 150) for a wire connecting strip device (34; 68) for the uninterrupted changeover of wires (26) of a telecommunications cable (24), the wire connecting strip device (34) preferably having a wire connecting strip (36), a base unit (40) and a cover unit (38) and the wire connecting strip (36) having contact units (42) for the respective connection of the incoming/outgoing wire (27; 28) of an incoming/ outgoing telecommunications cable (32; 22), in order to produce an electrical contact between the respective incoming and outgoing wires (27, 28), and there being a for each contact unit a test opening (44) which is open to the outside, whereby the changeover device (50; 60) has a first contact device (52) having contact elements (56) and a second contact device (54) in contact with the first contact device (52) and having contact elements (56), and the changeover device (50; 60) is designed in such a way that, in the plugged-on state, the contact elements (56), which can be guided into the test openings (44), of the first and/or second contact device in each case produce contact with the contact units (42) of the respective wire connecting strip device (34; 68).

7. The device as claimed in claim 6, wherein the contact elements are designed as pin elements (56).

8. The device as claimed in claim 6 or 7, wherein the contact elements (56) are designed to be displaceable in the direction of their longitudinal axis (80) and are elastically mounted.

9. The device as claimed in claim 8, wherein the contact elements (56) are subject to the action of a spring element (82).

10. The device as claimed in one or more of the preceding claims 6 to 9, wherein the contact elements (56) are in each case longitudinally displaceably mounted in a hollow profile (84).

11. The device as claimed in one or more of the preceding claims 6 to 10, wherein there is a locking device (64; 110; 116) which detachably locks the changeover device (60) or the contact device (52, 54) to the wire connecting strip device (34) when it is plugged on, the locking device (64; 110; 116) engaging around the wire connecting strip device (34) preferably section by section from above and/or below and/or from the side.

12. The device as claimed in one or more of the preceding claims 6 to 11, wherein the first contact device (52) and the second contact device (54) are present in one housing (58) (Fig. 9).

13. The device as claimed in one or more of claims 6 to 11, wherein the first and the second contact device (52; 54) are present in separate housings (58.1, 58.2) and there is a flexible cable (62) between the housings.

14. The device as claimed in one or more of the preceding claims 6 to 13, wherein there is a positional fixing device (78) for the temporary detachable fixing of the new wires to be inserted.

15. The device as claimed in one or more of the preceding claims 6 to 14, wherein the first or second contact device has 20, 40, 50 contact elements or a multiple of the abovementioned values.

16. The device (150) as claimed in one or more of claims 6, 13, 14, 15, wherein the first contact device (152) and/or the second contact device (154) has penetration elements which produce contact by means of penetrating the insulating sheath of the respective wire (Fig. 17).

17. The device as claimed in claim 16, wherein the first and/or second contact device (152, 154) has a contact surface (166) having many contact points, onto which the wires can be pressed down in each case in a fixed manner.

18. The device as claimed in claim 17, wherein the contact surface (166) is elastically mounted.

19. The device as claimed in claim 17, wherein the contact points are formed by stamped-out crater tips (168).

20. The device as claimed in one or more of claims 6, 16 to 19, wherein the contact devices (152, 154) can be fastened detachably to the changeover device (150).

21. The device as claimed in one or more of claims 17 to 20, wherein there are at least four contact surfaces on one contact device (152, 154).

22. The device (130) as claimed in one or more of claims 6 to 15, wherein the second contact device has contact elements which are present in a grid form and onto which a wire connecting strip device can be plugged in a contacting manner.

## Revendications

1. Procédé de commutation pour passer, sans interruption, de brins anciens à remplacer d'un câble de télécommunication à des brins neufs, exempts de défauts, d'un câble de télécommunication de préférence neuf, la connexion entre des brins entrants et sortants d'un câble de télécommunication s'effectuant au moyen d'un dispositif à barrette de connexion de brins (AVL), à l'intérieur duquel les brins entrants ou sortants respectifs sont raccordés aux brins anciens,
**caractérisé** par les étapes suivantes, à entreprendre sur les régions terminales (épissures) des brins anciens ou encore des brins entrants/sortants, en utilisant un dispositif de commutation enfichable pourvu d'un premier et d'un deuxième dispositif de contact :
a) raccordement électriquement conducteur de brins temporaires exempts de défauts au premier dispositif de contact,
b) raccordement électriquement conducteur du deuxième dispositif de contact aux brins entrants ou sortants, le premier dispositif de contact étant relié en conduction électrique au deuxième dispositif de contact,
c) enlèvement des brins anciens du dispositif existant à barrette de connexion de brins,
d) raccordement des brins neufs dans le dispositif existant à barrette de connexion de brins,
e) débranchement du deuxième dispositif de contact des brins entrants ou sortants, et
au choix
f) répétition des étapes b) à e) sur d'autres brins entrants ou sortants sans changer les brins temporaires
ou
g) débranchement du premier dispositif de contact des brins neufs afin de mettre un terme à l'opération de commutation.

2. Procédé selon la revendication 1, **caractérisé** par les étapes suivantes :
a) raccordement de brins temporaires exempts de défauts à un dispositif neuf à barrette de connexion de brins,
b) raccordement du premier dispositif de contact au dispositif neuf à barrette de connexion de brins afin de réaliser le contact avec les brins temporaires,
c) raccordement d'un deuxième dispositif de contact à un dispositif existant à barrette de connexion de brins pour les brins anciens, afin de réaliser le contact,
d) enlèvement des brins anciens du dispositif existant à barrette de connexion de brins,
e) raccordement des brins neufs dans le dispositif existant à barrette de connexion de brins,
f) débranchement du deuxième dispositif de contact du dispositif existant à barrette de connexion de brins, et
au choix
g) répétition des étapes c) à f) sur d'autres brins entrants ou sortants sans changer les brins temporaires
ou
h) débranchement du premier dispositif de contact de la barrette neuve de connexion de brins.

3. Procédé selon la revendication 2, **caractérisé** en ce que le dispositif de commutation est, à la suite de son enfichage sur la barrette respective de connexion de brins, assujetti de manière amovible dans sa position par rapport à cette dernière.

4. Procédé selon une ou plusieurs des revendications précédentes, **caractérisé** en ce que les étapes du procédé sont exécutées de façon sensiblement synchrone aux deux extrémités des brins respectivement temporaires, anciens ou neufs.

5. Procédé selon une ou plusieurs des revendications précédentes, **caractérisé** en ce qu'on utilise comme brins temporaires des brins non endommagés d'un câble neuf, les brins non connectés d'un câble ancien, les brins accessibles d'un câble voisin ou les brins d'un câble auxiliaire.

6. Dispositif de commutation (50; 60; 130; 150) pour un dispositif à barrette de connexion de brins (34 ; 68), afin de remplacer sans interruption des brins (26) d'un câble de télécommunication (24), le dispositif à barrette de connexion de brins (34) présentant, de préférence, une barrette de connexion de brins (36), une unité de fond (40) et une unité de couvercle (38), et la barrette de connexion de brins (36) possédant des unités de contact (42) pour le raccordement respectif des brins entrants/sortants (27 ; 28) d'un câble de télécommunication entrant/sortant (32 ; 22), afin de réaliser un contact électrique entre les brins entrants et sortants respectifs (27, 28), et une ouverture de contrôle (44) ouverte vers l'extérieur étant présente pour chaque unité de contact,
**caractérisé** en ce que le dispositif de commutation (50; 60) présente un premier dispositif de contact (52) pourvu d'éléments de contact (56) et un deuxième dispositif de contact (54) pourvu d'éléments de contact (56) et se trouvant en contact avec le premier dispositif de contact (52), et le dispositif de commutation (50; 60) est conçu de telle sorte qu'à l'état enfiché, les éléments de contact (56) du premier et/ou du deuxième dispositif de contact, qui peuvent être introduits dans les ouvertures de contrôle (44), réalisent respectivement le contact avec les unités de contact (42) du dispositif respectif à barrette de connexion de brins (34 ; 68).

7. Dispositif selon la revendication 6, **caractérisé** en ce que les éléments de contact sont réalisés sous la forme d'éléments à broches (56).

8. Dispositif selon la revendication 6 ou 7, **caractérisé** en ce que les éléments de contact (56) sont réalisés coulissants dans la direction de leur axe longitudinal (80) et montés élastiquement.

9. Dispositif selon la revendication 8, **caractérisé** en ce que les éléments de contact (56) sont soumis à l'action d'un élément de ressort (82).

10. Dispositif selon une ou plusieurs des revendications 6 à 9, **caractérisé** en ce que les éléments de contact (56) sont respectivement montés à coulissement longitudinal dans un profilé creux (84).

11. Dispositif selon une ou plusieurs des revendications 6 à 10, **caractérisé** en ce qu'un dispositif de blocage (64 ; 110 ; 116) est présent, qui bloque de manière amovible le dispositif de commutation (60) ou encore le dispositif de contact (52, 54) à l'état enfiché sur le dispositif à barrette de connexion de brins (34), le dispositif de blocage (64 ; 110 ; 116) s'engageant de préférence autour du dispositif à barrette de connexion de brins (34) sectoriellement par le haut et/ou par le bas et/ou par le côté.

12. Dispositif selon une ou plusieurs des revendications 6 à 11, **caractérisé** en ce que le premier dispositif de contact (52) et le deuxième dispositif de contact (54) sont présents dans un boîtier (58) (figure 9).

13. Dispositif selon une ou plusieurs des revendications 6 à 11, **caractérisé** en ce que le premier dispositif de contact (52) et le deuxième dispositif de contact (54) sont présents dans des boîtiers séparés (58.1, 58.2), et un câble flexible (62) est présent entre les boîtiers.

14. Dispositif selon une ou plusieurs des revendications 6 à 13, **caractérisé** en ce qu'un dispositif de fixation en position (78) est présent pour la fixation en position temporaire amovible des brins neufs à installer.

15. Dispositif selon une ou plusieurs des revendications 6 à 14, **caractérisé** en ce que le premier ou deuxième dispositif de contact présente 20, 40, 50 éléments de contact, ou un multiple des valeurs précitées.

16. Dispositif (150) selon une ou plusieurs des revendications 6, 13, 14, 15, **caractérisé** en ce que le premier dispositif de contact (152) et/ou le deuxième dispositif de contact (154) présentent des éléments de pénétration, qui réalisent le contact en traversant la gaine isolante du brin respectif (figure 17).

17. Dispositif selon la revendication 16, **caractérisé** en ce que le premier dispositif de contact (152) et/ou le deuxième dispositif de contact (154) présentent une surface de contact (166) pourvue de nombreuses pointes de contact, sur laquelle les brins peuvent être enfoncés en étant respectivement fixés en position.

18. Dispositif selon la revendication 17, **caractérisé** en ce que la surface de contact (166) est montée élastiquement.

19. Dispositif selon la revendication 17, **caractérisé** en ce que les pointes de contact sont formées par des pointes découpées en cratères (168).

20. Dispositif selon une ou plusieurs des revendications 6, 16 à 19, **caractérisé** en ce que les dispositifs de contact (152, 154) peuvent être fixés de manière amovible sur le dispositif de commutation (150).

21. Dispositif selon une ou plusieurs des revendications 17 à 20, **caractérisé** en ce qu'au moins quatre surfaces de contact sont présentes sur un dispositif de contact (152, 154).

22. Dispositif (130) selon une ou plusieurs des revendications 6 à 15, **caractérisé** en ce que le deuxième dispositif de contact possède des éléments de contact présents en quadrillage, sur lesquels un dispositif à barrette de connexion de brins peut être emboîté avec réalisation du contact.
